# EUROPEAN PATENT SPECIFICATION

(11) **EP 1 590 215 B1**
(45) Date of publication and mention of the grant of the patent: **13.06.2007**
(21) Application number: 04705052.1
(22) Date of filing: 26.01.2004
(51) Int. Cl.: B60S 9/02, B66C 23/78, B60S 9/12, B66C 23/80

(54) **A STABILIZER LEG FOR A TRUCK**
STABILISATORBEIN FÜR EINEN LASTWAGEN
JAMBE DE STABILISATION POUR CAMION

(30) Priority: 24.01.2003 DK 200300097; 18.02.2003 DK 200300241
(43) Date of publication of application: 02.11.2005
(73) Proprietor: Hojbjerg Maskinfabrik A/S, 8270 Hojbjerg (DK)
(72) Inventor: ANDERSEN, Jes, Gron, DK-8541 Skodstrup (DK)
(74) Representative: Brock-Nannestad, George
(86) International application number: PCT/DK2004/000051
(87) International publication number: WO 2004/065188

(56) References cited:
- EP-A1- 0 945 318
- EP-A2- 0 187 388
- WO-A1-96/34782
- DE-B- 1 267 397

## Description

The invention relates to a swivellable hydraulic stabilizer leg for truck cranes and similar vehicles with a mechanism to swivel the stabilizer leg from an operational position to a transport position comprising a linear force transmission that is converted to a rotary movement at the bearing journal of the stabilizer leg.

A truck is frequently fitted with a crane that is used for loading and unloading of goods. If the crane has a long reach, it is important that the area of support is as large as possible and furthermore has a firmer contact to the ground than that which may be provided by inflated truck tyres. For this reason such a truck is fitted with extendable beams that are pulled out sideways with respect to the truck, at least to the side where the load is disposed. At the end of the beam there is fitted a hydraulic cylinder that has a shoe for pressing against the ground. The piston is extended so far that the truck chassis remains horizontal when the crane is loaded. There is rarely room to let the cylinder hang downwards during transport, even though the piston may be retracted, and for this reason swivelling joints have been developed so that the cylinder is swivelled in the opposite direction and points upwards during transport. Because of the load and worker's protection rules this rotation frequently occurs by hydraulic power, e.g. as described in the following patent publications.

EP-A-658 509 describes the use of a toothed rack driven by a separate hydraulic cylinder for cooperation with a fixed pinion, but it is disadvantageous that the drive mechanism is completely open and subjected to heavy wear due to dust and gravel, as well as the fact that it leaves a downwards projecting rack when the stabilizer leg has been raised.

EP-A-945 318 describes the use of a toothed rack driven from the piston of the stabilizer leg for cooperation with a fixed pinion, but this, too, has the disadvantage that the drive mechanism is completely open and subjected to heavy wear due to dust and gravel, as well as the fact that it leaves a downwards projecting rack when the stabilizer leg has been raised.

EP-A-1 249 376 describes a hydraulic rotary piston motor fitted at the swivelling part. This is dustproof, but the manufacture of a rotary piston motor is expensive.

WO-A-93/11981 demonstrates the use of a toggle joint mechanism driven by the piston of the stabilizer leg. This latter solution is very dependent on the absence of slack in the rod links. It is furthermore kinematically very sluggish in its movements, because part of the swivelling entails a large acceleration of the stabilizer leg.

There is hence a need for a mechanism that does not display the weakness of the open mechanisms or the cost of having a built-in hydraulic motor. This is obtained in a mechanism according to the invention that is particular in that the conversion from linear to rotary movement occurs by tangential pressure on a number of rotational bodies that are lined up in a walking-stick shaped track with parallel walls that is constituted of a straight part and of an arc of a circle having an angle exceeding 90°, said track passing tangentially into said arc and being formed in a housing that is firmly joined to the stabilizer leg and surrounds its journal, said pressure being applied in the straight part of the track, and in that the innermost rotational body abuts a knob that is secured against rotation on said journal. By the term "a walking-stick shaped track" is meant a track with parallel walls that is constituted of a straight part that passes tangentially into an arc of a circle having an .. angle exceeding 90°. Such a track is preferentially milled out of the material of a housing as mentioned, but it may obviously also be manufactured by casting and subsequent finishing by milling of the housing. A rotational body for use in the invention will typically be a cylindrical roller with a height corresponding to the depth of the track, while having a line contact to its neighbouring rollers, which permits the transmission of the compressive forces in a simple fashion.

In an advantageous embodiment the first rotational body is acted upon in the straight part of the track by a rod that is acted upon by the piston in a hydraulic cylinder. Such a cylinder may be fitted to the outside of the stabilizer leg or in a particularly advantageous embodiment be constituted by the hydraulic cylinder that is placed inside the stabilizer leg.

According to a further advantageous embodiment of the invention the first rotational body in the straight part of the track is acted upon by a rod connection that transmits the movement of the piston rod of the stabilizing leg during retraction. The linear power transmission is hence constituted by a rod connection from the piston of the stabilizer leg to the first rotational body in the straight part of the track.

According to a further advantageous embodiment of the invention the rod connection is supported in bushings close to the mouth of the cylinder of the stabilizing leg and close to the first rotational body, and it transmits a force in a sideways shifted parallel direction between these two bushings. Thereby the rod is controlled in direction, making it suitable for transmitting a linear force, and rotation.

A converter for linear to rotating movement according to the invention may also be integrated with the locking device that is used for the normal functioning of the stabilizer leg, so that it does not swivel away from the vertical position, just because it is fitted with a mechanism for reversal when driving.

In an advantageous use of the invention the stabilizer leg with a swivelling mechanism are mounted on an extendable beam that is disposed partly above and close to the wheels of a vehicle, in which the beam is retracted to within the vertical plane defined by the outer sides of the vehicle's wheels. Such an extendable beam may be pulled in closer to the centre of the truck than known mechanical constructions, because there is no downwards projecting mechanical part when the stabilizer leg is swivelled upwards.

The invention will be described in greater detail with reference to the drawing, in which
Fig. 1 shows a stabilizer leg with the cylinder almost completely retracted,
Fig. 2 shows a stabilizer leg, in which the cylinder is still more retracted, whereby the stabilizer leg has swung to horizontal position,
Fig. 3 shows a stabilizer leg, in which the cylinder is fully retracted, whereby the stabilizer leg has swung completely to a vertical position,
Fig. 4 shows the conversion of linear movement to a rotational movement in the start position corresponding to Fig. 1,
Fig. 5 shows the conversion of linear movement to a rotational movement in the start position corresponding to Fig. 2, and
Fig. 6 shows the conversion of linear movement to a rotational movement in the start position corresponding to Fig. 3.

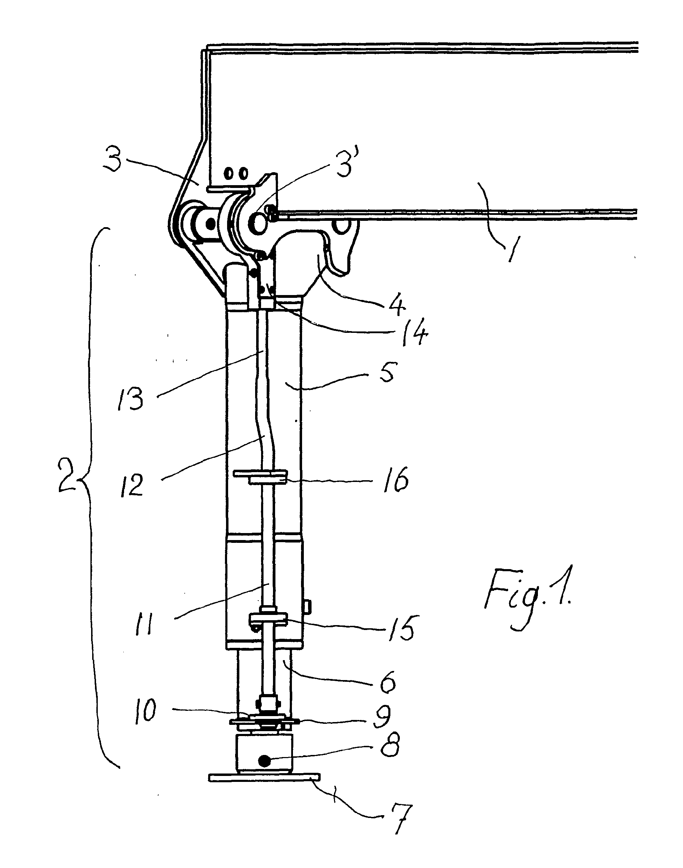

In Fig. 1 is shown an extendable beam 1 with a fitted stabilizer leg 2. The beam is mounted in an extendable fashion on the chassis of a truck that carries a crane or a ladder. The stabilizer leg is fitted to the beam by means of a strong hinge 3 so that it may be turned in a plane perpendicular to the beam, and it may be locked in a manner not shown to the beam by means of a releasable fitting 4. The stabilizer leg consists of a hydraulic cylinder 5 with a piston that is visible at the piston rod 6. At the end of the piston rod a shoe 7 is fitted permitting a certain tilt in a joint 8. In use the piston rod 6 is extended, until the stabilizer leg carries a suitable part of the weight of the truck, but during preparation for driving away the piston is retracted. The piston rod 6 is supplied with a collar 9 that may interact with an abutting surface on a stiff rod connection 11, 12, 13 mounted axially displaceable on the outside of the cylinder 5. The rod connection transmits pressure and linear movement from the collar 9 to a converter 14 for linear to rotational movement. This converter is permanently mounted on the stabilizer leg 2 and is only active when the releasable fitting 4 has been released.

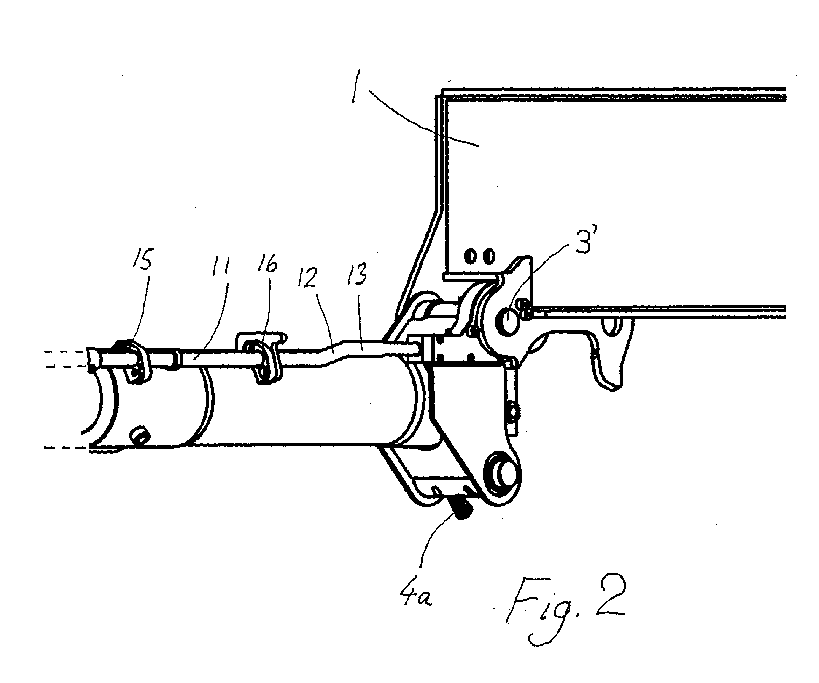

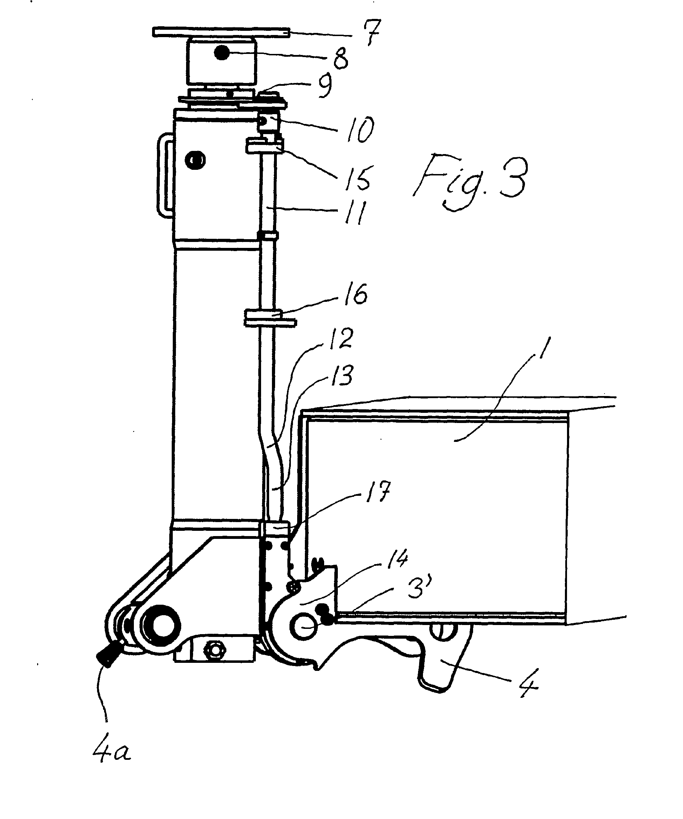

As shown in the present embodiment, the rod connection is displaced in parallel and transmits a force by means of a skewed part 12 and the rod is supported in two bushings 15, 16 and a bore 17 in the converter 14. When the collar 9 is pressed against the abutment 10 while the piston rod 6 is moved into the cylinder 5, the pressure and movement are transmitted to the other end 13 of the rod. The converter 14 starts turning around the fixed journal 3' in the hinge 3, and the stabilizer leg is swivelled around to the position shown in Fig. 2. By further retraction of the piston rod 6 the movement continues until the vertical position shown in Fig. 3 is reached. Subsequently the beam 1 may be retracted into the chassis, i.e. to the right in the figure. In Fig. 2 and Fig. 3 there is similarly shown the placement of a release 4a for the fitting 4.

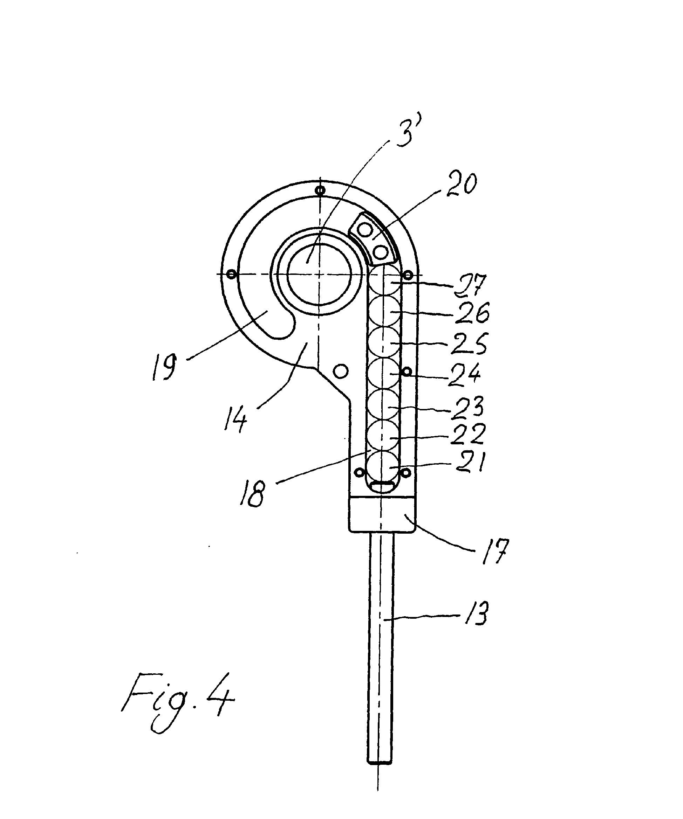

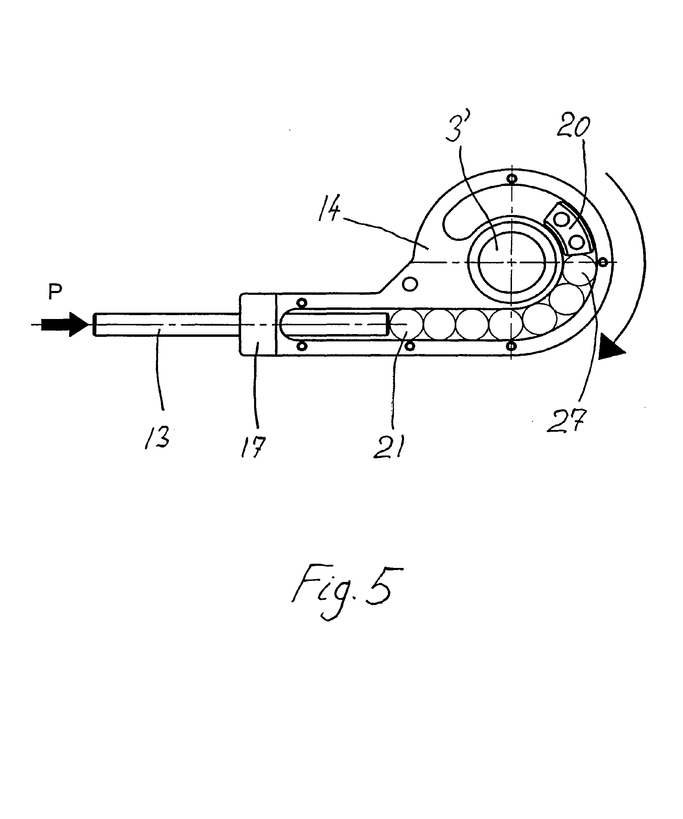

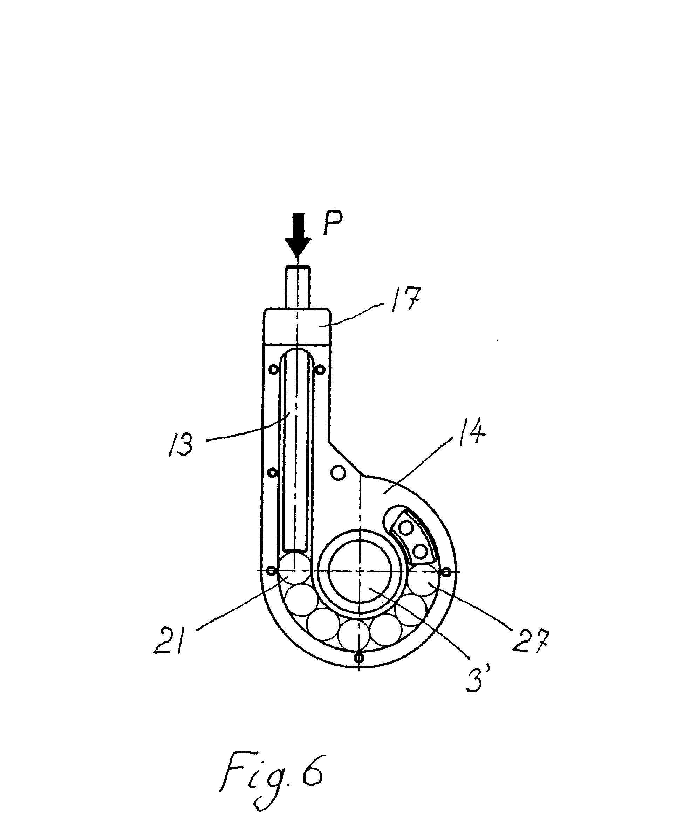

In Fig. 4 the converter 14 is shown opened, i.e. an essentially plane lid has been removed, and in enlargement. The end 13 of the rod is supported in a suitable bushing in the bore 17 into a track 18, 19, which consists of two parts, a straight part 18 which may receive the end 13 of the rod and a circular part 19. The circular part is concentric with the fixed journal 3' in the hinge 3 that is surrounded by the converter 14. At the transition between the two parts there is provided a knob 20 that is firmly connected to the shaft 3' in that both are mounted on the same strong carrier for the stabilizer leg (2). Between the end 13 of the rod and the knob 20 there are disposed a number of cylindrical rollers 21-27, which are fitted well lubricated in the track 18. When the end 13 of the rod is pressed into the track 18 due to the force P from the piston rod 6 via the collar 9, the abutment 10, and the rod 11, 12, the rolls 21-27 press against each other and transfer the force to the knob 20. Due to the reaction force, the housing for the converter 14 is turned, and thereby the stabilizer leg 1 is turned as well. Thereby the positions shown in Fig. 5 and Fig. 6 are reached. The movement will be quite even, because the transfer of the force causes a linear variation of the angle, and the force is always acting perpendicular to the knob 20, because the reaction forces are taken by the circular track 19.

In Fig. 6 the end 13 of the rod has reached the end of the straight track 18 and the rolls 21-27 are all inside the circular track 19.

The combination of a track with vertical sides that is simple to mill and the use of cylindrical rolls as rotational bodies make it very easy to adapt the construction to the dimensions of existing rotatable stabilizer legs, whereby the advantages of the invention may be obtained by later fitting to hydraulic stabilizer legs that function well per se. Similarly, the torque required to enable the stabilizer leg to pass the horizontal position between the two vertical positions may be obtained by the use of a smaller hydraulic force by making the radius in the circular track, and hence the housing, larger than shown in the illustrated embodiment. In this case the number of rotational bodies should be increased.

It is within the abilities of the skilled person to provide means for creating the required force to commence the movement of the stabilizer leg from vertical upwards to the downwards swivelling to vertical downwards. For instance a person may observe the suitability of the ground for each individual stabilizer leg and in this conjunction with this perform a manual pull in the stabilizer leg, but there may also be provided a spring force that is counteracted during the retraction and swivelling of the stabilizer leg.

It would appear obvious that the stabilizer leg according to the invention may be used in conjunction with any vehicle, in which there is desired a possibility for swivelling a stabilizer leg upwards to a vertical position without the use of a complicated and expensive hydraulic motor. A stabilizer leg according to the invention is not constructively tied to being moved in a plane perpendicular to an extendable beam, but may indeed move in the same plane as the beam.

## Claims

1. A swivellable (3) hydraulic stabilizer leg (2) for truck cranes and similar vehicles with a mechanism (14) to swivel the stabilizer leg from an operational position to a transport position comprising a linear force transmission (13) that is converted to a rotary movement at the bearing journal (3') of the stabilizer leg, **characterized in that** the conversion from linear to rotary movement occurs by tangential pressure on a number of rotational bodies (21-27), that are lined up in a track (18, 19) with parallel walls that is constituted of a straight part (18) and of an arc (19) of a circle having an angle exceeding 90°, said track passing tangentially into said arc (19) and being formed in a housing that is firmly joined to the stabilizer leg (2) and surrounds its journal (3'), said pressure being applied in the straight part of the track, and **in that** the innermost rotational body (27) abuts a knob (20) that is secured against rotation on said journal (3').

2. A swivellable hydraulic stabilizer leg according to claim 1,
**characterized in that** the first rotational body (21) is acted upon in the straight part (18) of the track by a rod (13) that is acted upon by the piston in a hydraulic cylinder.

3. A swivellable hydraulic stabilizer leg according to claim 2,
**characterized in that** the first rotational body (21) in the straight part (18) of the track is acted upon by a rod connection (11, 12, 13) that transmits the movement of the piston rod (6) of the stabilizing leg (2) during retraction.

4. A swivellable hydraulic stabilizer leg according to claim 3,
**characterized in that** the rod connection (11, 12, 13) is supported in bushings (14, 16) close to the mouth of the cylinder of the stabilizing leg and close to (17) the first rotational body (21) and that it transmits a force in a sideways shifted parallel direction (12) between these two bushings.

5. Use of a swivellable hydraulic stabilizer leg according to any of the preceding claims for support of the chassis of a vehicle, whereby it is mounted on an extendable beam (1) that projects from the chassis and is disposed partly above and close to the wheels of the vehicle, **characterized in that** when stabilization is desired the extendable beam (1) is extended from the vehicle chassis at least to the extent required to enable the stabilizer leg to move through a half-circle from a position pointing vertically upwards to a position pointing vertically downwards.

6. Use of a swivellable hydraulic stabilizer leg according to any of the claims 1-5 in conjunction with withdrawal from a stabilizing position, whereby it is mounted on an extendable beam (1) that is disposed close to the wheels of a vehicle, **characterized in that** the hydraulic stabilizer leg (2) is shortened, whereby the last part of the movement causes rotation through a half-circle from a position pointing vertically downwards to a position pointing vertically upwards, whereupon the end of the beam (1) with the stabilizer leg (2) is retracted to within the vertical plane defined by the outer sides of the vehicle's wheels.

## Patentansprüche

1. Ein umlenkbares (3) hydraulisches Stützbein (2) für Kräne für LKWs und ähnliche Fahrzeuge, mit einer Mechanismus (14) zum Umlenken des Stützbeins von einer Arbeitsstellung in einer Fahrstellung, einer linearen Kraftübertragung (13) umfassend, die in einer Umdrehungsbewegung bei dem Zapfen (3') des Stützbeinlagers umgesetzt wird, **dadurch gekennzeichnet, dass** die Umsetzung von einer linearen Bewegung in einer Umdrehungsbewegung mittels tangentialem Druck an einer Anzahl von Umdrehungskörper (21-27), die in einer Spur (18, 19) mit parallellen Wänden aufgereiht sind, die aus einem geradlinigen Teil (18) und einem Kreisbogen (19) besteht, mit einem Winkel, den 90° überschreitet, die genannte Spur tangential in der genannten Kreisbogen (19) einläuft und in einem Gehäuse geformt ist, das fest an dem Stützbein (2) verbunden ist und ihrem Zapfen (3') umschliesst, den genannten Druck in der geradlinigen Teil der Spur angelegt wird, und **dadurch dass** der innerste Umdrehungskörper (27) an einem Knopf (20) anliegt, den gegen Drehung auf dem genannten Zapfen (3') gesichert ist.

2. Ein umlenkbares hydraulisches Stützbein nach Anspruch 1, **dadurch gekennzeichnet, dass** der erste Umdrehungskörper (21) in dem geradlinigen Teil (18) der Spur aktiviert wird mittels einer Stange (13), die von dem Stempel in einem hydraulischen Zylinder aktiviert wird.

3. Ein umlenkbares hydraulisches Stützbein nach Anspruch 2, **dadurch gekennzeichnet, dass** der erste Umdrehungskörper (21) in dem geradlinigen Teil (18) der Spur aktiviert wird mittels eines Gestänge (11, 12, 13), dass die Bewegung der Stempelstange (6) des Stützbeines (2) während der Zurückziehung überführt.

4. Ein umlenkbares hydraulisches Stützbein nach Anspruch 1, **dadurch gekennzeichnet, dass** das Gestänge (11, 12, 13) in Büchsen (14, 16), die sich nahe an der Öffnung des Zylinders des Stützbein und nahe (17) an dem ersten Umdrehungskörper (21) befinden, und das es eine Kraft in einer seitlich parallelverschobenen Richtung (12) zwischen diesen zwei Büchsen überführt.

5. Verwendung eines umlenkbares hydraulisches Stützbeins nach jedem der obigen Ansprüchen zu Unterstützung des Fahrgestells eines Fahrzeuges, wobei es auf einem ausziehbaren Balken (1) montiert ist, das von dem Fahrgestell ausragt und teilweise oberhalb und nahe an den Rädern des Farhzeuges angebracht ist, **dadurch gekennzeichnet, dass** wenn Unterstützung gewünscht wird, wird den ausziehbaren Balken (1) vom Fahrgestell ausgezogen, wenigstens zum Ausmass benötigt um das Stützbein einer Bewegung in einem Halbkreis von einer Stellung gerade aufwärts zu einer Stellung gerade abwärts zu ermöglichen.

6. Verwendung eines umlenkbares hydraulisches Stützbeins nach jedem der obigen Ansprüche 1-5 bei der Zurückziehung von einer stützenden Stellung, wobei es auf einem ausziehbaren Balken (1) montiert ist, das nahe an den Rädern des Farhzeuges angebracht ist, **dadurch gekennzeichnet, dass** das hydraulische Stützbein (2) verkürzt wird, wobei der letzte Teil der Bewegung eine Drehung in einem Halbkreis von einer Stellung gerade abwärts zu einer Stellung gerade aufwärts verursacht, wonach das Ende des Balkens (1) mit dem Stützbein (2) zurückgezogen wird, bis es innerhalb der Vertikalebene, die von den Aussenseiten der Fahrzeugrädern bestimmt ist, erlangt.

## Revendications

1. Une béquille (2) hydraulique rotative (3) pour grues des camions et véhicules comparables, avec une mécanisme (14) pour roter la béquille d'une position opérationelle en une position de transport, comprenant une transmission linéaire de force (13) converti en un mouvement rotatif au tourillon (3') de la béquille, **caractérisé en ce que** la conversion entre un mouvement linéaire et un mouvement rotatif a lieu par pression tangentielle sur un nombre de corps de rotation (21-27) qui sont placé dans un guidage (18, 19) avec des parois paralleles, qui consiste en une partie rectiligne (18) et un arc de cercle avec un angle excédant 90°, ledit guidage passant tangentiellement en ledit arc (19) et étant crée dans une boîte fixé sur la béquille (2) et entoumant son tourillon (3'), ladite pression étant appliquée dans la partie rectiligne du guidage, et **en ce que** le corps de rotation tout au fond (27) pousse contre une clavette (20) qui est retenue contre rotation sur ladite béquille (3').

2. Une béquille (2) hydraulique rotative selon revendication 1, **caractérisé en ce que** le premier corps de rotation est mouvé dans la partie rectiligne (18) du guidage par une tige (13) qui est mouvé par le piston dans un cylindre hydraulique.

3. Une béquille (2) hydraulique rotative selon revendication 2, **caractérisé en ce que** le premier corps de rotation (21) dans la partie rectiligne (18) est mouvé par une connection de tige (11, 12, 13) que transmet le mouvement de la tige (6) de piston de la béquille (2) pendant le retirage.

4. Une béquille (2) hydraulique rotative selon revendication 3, **caractérisé en ce que** le connection de tige (11, 12, 13) est supporté dans des manchons (14, 16) près du bouche du cylindre de la béquille, et près du (17) le premier corps de rotation (21), et **en ce qu'**il transmet une force dans une direction parallelle et déplacé (21) entre ces deux manchons.

5. Utilisation d'une béquille hydraulique rotative selon chacun des revendications précédent pour supporter le chassis d'une véhicule, par où elle est monté sur une poutre télescopique (1), venant du chassis et monté partiellement au-dessus et près des roues du vehicule, **caractérisé en ce que** quand une stabilisation est demandée, la poutre télescopique (1) est étendu du chassis de vehicule au moins d'une degrée pour permettre la béquille de mouver dans une demi-cercle d'une position verticalement vers le haut en une position verticalement vers le bas.

6. Utilisation d'une béquille hydraulique rotative selon chacun des revendications 1-5 en conjonction avec une retirage d'une position de stabilisation, par où elle est monté sur une poutre télescopique (1) près des roues d'un véhicule, **caractérisé en ce que** la béquille hydraulique (2) est raccourci, par où la dernière partie du mouvement force une rotation d'une demi-cercle d'une position verticalement vers le bas en une position verticalement vers le haut, suivi par une retraction de l'extrémité de la poutre (1) avec la béquille (2) dans une position au dedans le plan vertical defini par les cotés extérieures des roues du véhicule.
